# EUROPEAN PATENT APPLICATION

(11) **EP 4 432 407 A1**
(43) Date of publication of application: **18.09.2024**
(21) Application number: 22901663.9
(22) Date of filing: 23.11.2022
(51) Int. Cl.: H01M 8/1065, H01M 8/1067, H01M 8/1069, H01M 8/1004, H01M 4/88, H01M 4/86, H01M 8/10

(54) **MEMBRANE-ELECTRODE ASSEMBLY AND FUEL CELL INCLUDING SAME**

(30) Priority: 03.12.2021 KR 20210172028; 14.07.2022 KR 20220086943
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Ter Meer Steinmeister & Partner
(86) International application number: PCT/KR2022/018630
(87) International publication number: WO 2023/101305

(57) **Abstract**

A membrane-electrode assembly with improved durability is provided. An embodiment of the present invention provides a membrane-electrode assembly comprising: a polymer electrolyte membrane having concavo-convex portions on at least one surface thereof and a catalyst layer disposed on the polymer electrolyte membrane, wherein the catalyst layer includes a first catalyst layer loaded into the inside of the concavo-convex portion and a second catalyst layer disposed on the polymer electrolyte membrane, the first catalyst layer being interposed between the polymer electrolyte membrane and the second catalyst layer.

## Description

### [TECHNICAL FIELD]

The present disclosure relates to a membrane-electrode assembly and a fuel cell including the same, and more particularly, to a membrane-electrode assembly having improved durability and a fuel cell including the same.

### [BACKGROUND ART]

A fuel cell is a battery that directly converts chemical energy generated by oxidation of a fuel into electrical energy, and has been highlighted as a next-generation energy source due to its high energy efficiency and low emission of pollutants.

A fuel cell generally has a structure in which an anode and a cathode are formed on both sides of a polymer electrolyte membrane interposed therebetween, and such a structure is referred to as a membrane electrode assembly (MEA).

Fuel cells can be classified into alkaline electrolyte fuel cells and polymer electrolyte membrane fuel cells (PEMFC) depending on the type of electrolyte membrane, and among them, the polymer electrolyte membrane fuel cells, due to advantages, such as a low operating temperature of below 100°C, fast start-up and response characteristics, excellent durability, *etc.,* has been highlighted as a portable power supply and power supplies for vehicles and home.

A representative example of such a polymer electrolyte membrane fuel cell is a proton exchange membrane fuel cell (PEMFC), *etc.* using hydrogen gas as fuel.

Summarizing the reactions occurring in the polymer electrolyte membrane fuel cell, first, when a fuel such as hydrogen gas is supplied to the oxidizing electrode (or an anode), hydrogen ions (H⁺) and electrons (e⁻) are generated by the oxidation reaction of the hydrogen gas at the oxidizing electrode. The hydrogen ions generated are transferred to the reducing electrode through the polymer electrolyte membrane, and the electrons generated are transferred to the reducing electrode (cathode) through an external circuit. Oxygen gas is supplied from the reducing electrode, and oxygen gas is combined with hydrogen ions and electrons to generate water by a reduction reaction of oxygen.

Since a membrane-electrode assembly including a polymer electrolyte membrane is prepared using a flat film in the conventional membrane-electrode assembly, there was a problem in that the interfacial bonding between an electrolyte membrane and electrodes was not sufficient depending on the process. As a result, there was a problem in that the performance of the polymer electrolyte membrane fuel cell is deteriorated or the lifetme is shortened.

Meanwhile, Korean Patent Publication No. 10-1715447B1 (published on December 24, 2014) is an invention which relates to a membrane electrode assembly including an electrolyte membrane having a concave portion on the surface of an electrolyte membrane and electrodes having a convex portion on the surface thereof, a preparation method thereof, and a fuel cell including the same. However, although the Korean Patent Publication above merely discloses a polymer electrolyte membrane having concavo-convex portions, there was still a problem in that the durability of the electrode is deteriorated due to insufficient interfacial bonding between the electrodes and the electrolyte membrane.

### [DETAILED DESCRIPTION OF INVENTION]

### [TECHNICAL PROBLEMS]

In order to solve the above problems, an object of the present disclosure is to provide a membrane-electrode assembly that improves interfacial bonding between a polymer electrolyte membrane and a catalyst layer.

In order to solve the above problems, another object of the present disclosure is to provide a membrane-electrode assembly with improved durability by improving interfacial bonding between catalyst layers.

In order to solve the above problems, still another object of the present disclosure is to provide a fuel cell including the membrane-electrode assembly.

The objects of the present disclosure are not limited to the above-mentioned objects, and other objects and advantages of the present disclosure not mentioned above can be understood by the following description and will be more clearly understood by the examples of the present disclosure. Additionally, it will be readily apparent that the objects and advantages of the present disclosure may be realized by means of the instrumentalities and combinations indicated in the claims.

### [TECHNICAL SOLUTION]

An embodiment of the present disclosure for achieving the above objects is a membrane-electrode assembly including a polymer electrolyte membrane having concavo-convex portions on at least one surface and a catalyst layer disposed on the polymer electrolyte membrane, in which the catalyst layer includes a first catalyst layer filling the inside of the concavo-convex portions and a second catalyst layer disposed on the polymer electrolyte membrane, and in which the first catalyst layer is interposed between the polymer electrolyte membrane and the second catalyst layer. Specifically, the first catalyst layer may be different from the second catalyst layer.

According to another embodiment of the present disclosure, the first catalyst layer includes a first ionomer, the second catalyst layer includes a second ionomer, and the weight of the first ionomer relative to the total weight of the first catalyst layer may be the same as or different from the weight of the second ionomer relative to the total weight of the second catalyst layer. Specifically, the weight of the first ionomer relative to the total weight of the first catalyst layer may be greater than the weight of the second ionomer relative to the total weight of the second catalyst layer. More specifically, the weight of the first ionomer relative to the total weight of the first catalyst layer may exceed 35 wt%, and the weight of the second ionomer relative to the total weight of the second catalyst layer may be less than 35 wt%.

Specifically, the first ionomer and the second ionomer may each independently be any one selected from the group consisting of hydrocarbon-based ionomers, fluorine-based ionomers, and mixtures thereof.

Specifically, the concavo-convex portions may include first concave portions and first convex portions alternately disposed with the first concave portions.

According to still another embodiment of the present disclosure, the first catalyst layer may be filled with 80% (v/v) or more based on the total volume of the first concave portions.

According to still another embodiment of the present disclosure, the first catalyst layer may completely fill the entire volume of the first concave portion. According to an embodiment, the first catalyst layer includes a first central portion and a sidewall portion provided with a first side wall portion and a second side wall portion disposed opposite to each other with the first central portion interposed therebetween, in which the first side wall portion may include a first side surface and a first curved surface extending from the first side surface to an upper surface of the first central portion, and the second side wall portion may include a second side surface and a second curved surface extending from the second side surface to an upper surface of the first central portion. According to an embodiment, the thickness H of the first central portion may be greater than 0 µm and less than 1 µm. According to an embodiment, the minimum value I of the thickness of the first sidewall portion may be greater than 0 and less than 0.8 times the thickness H of the first central portion, and greater than 0 and 0.5 times the thickness H of the first central portion. According to an embodiment, the maximum value B of the width of the first side wall portion may be less than 0.2 times the width A between the first and second side surfaces. According to an embodiment, the curvature R of the first curved surface may be less than or equal to the difference H-I between the thickness H of the first central portion and the minimum value I of the thickness of the first sidewall portion.

According to still another embodiment of the present disclosure, the first catalyst layer may further include a functional additive.

According to still another embodiment of the present disclosure, there may be provided a fuel cell including the membrane-electrode assembly.

### [EFFECT OF INVENTION]

According to the present disclosure, it is possible to provide a membrane-electrode assembly with improved chemical and mechanical durability as well as improved interfacial bonding between a polymer electrolyte membrane and a catalyst layer. As a result, both the performance and lifetime of the fuel cell can be improved.

In addition to the above effects, specific effects of the present disclosure will be described together while describing specific details for carrying out the present disclosure.

### [BRIEF DESCRIPTION OF THE DRAWING]

FIG. 1 is a cross-sectional view showing a membrane-electrode assembly according to an embodiment of the present disclosure.
FIG. 2 is an enlarged cross-sectional view of the concave-convex portions of FIG. 1.
FIG. 3 is a cross-sectional view showing a membrane-electrode assembly according to another embodiment of the present disclosure.
FIG. 4 is a cross-sectional view showing a membrane-electrode assembly according to still another embodiment of the present disclosure.
FIG. 5 is a schematic diagram for describing a fuel cell according to still another embodiment of the present disclosure.
FIG. 6 shows images of the membrane-electrode assembly according to Example 1-1.

### [BEST MODE]

Hereinafter, each configuration of the present disclosure will be described in more detail so that those skilled in the art can easily practice the same, but this is only one example, and the scope of rights of the present disclosure is not limited by the following description.

In an embodiment of the present disclosure, there is provided a membrane-electrode assembly including a polymer electrolyte membrane having concavo-convex portions on at least one surface and a catalyst layer disposed on the polymer electrolyte membrane, in which the catalyst layer includes a first catalyst layer filling the inside of the concavo-convex portions and a second catalyst layer disposed on the polymer electrolyte membrane, and in which the first catalyst layer is interposed between the polymer electrolyte membrane and the second catalyst layer. Specifically, the first catalyst layer may be different from the second catalyst layer. According to an aspect of the present disclosure, since the first catalyst layer is interposed between the polymer electrolyte membrane and the second catalyst layer, not only it is possible to improve the interfacial bonding between the polymer electrolyte membrane and the catalyst layer, but also it is possible to provide a membrane-electrode assembly with improved chemical and mechanical durability. As a result, both the performance and lifetime of the fuel cell can be improved.

Hereinafter, the configuration of the present disclosure will be described in more detail with reference to the drawings.

### 1. Membrane-electrode assembly

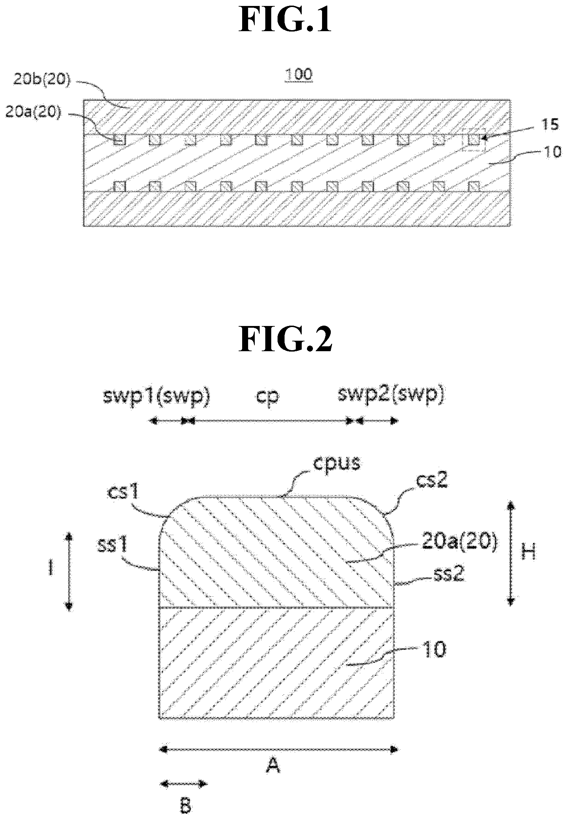

FIG. 1 is a cross-sectional view showing a membrane-electrode assembly according to an embodiment of the present disclosure.

Referring to FIG. 1, a membrane-electrode assembly 100 according to the present disclosure includes a polymer electrolyte membrane 10 and a catalyst layer 20.

The polymer electrolyte membrane 10 according to the present disclosure may have concave-convex portions 15 on at least one surface. Therefore, the concave-convex portions 15 may be provided on one side or both sides of the polymer electrolyte membrane 10.

A surface of the polymer electrolyte membrane 10 may have a plurality of concave-convex portions 15.

The concave-convex portions 15 according to the present disclosure may include first concave portions and first convex portions alternately disposed with the first concave portions. For example, the first concave portion may be an individual concave portion constituting the concave-convex portion, and the first convex portion may be an individual convex portion constituting the concave-convex portion.

Although the first catalyst layer 20a is shown in FIG. 1 as completely filling the entire volume of the first concave portions, the first catalyst layer 20a according to an embodiment of the present disclosure may be filled 80% (v/v) or more, preferably 80% (v/v) to 95% (v/v), and more preferably 85% (v/v) to 95% (v/v) based on the total volume of the first concave portions. When the first catalyst layer 20a is filled less than 80% (v/v) based on the total volume of the first concave portions, the interfacial bonding between the polymer electrolyte membrane and the catalyst layer may not be sufficiently large, thus not capable of significantly improving the interface durability. For example, the ratio of the volume of the first catalyst layer 20a to the total volume of the first concave portions may be determined by measuring the total volume of the first concave portions and the volume of the first catalyst layer using a scanning electron microscope (SEM).

The casting method used as a conventional method for preparing a polymer electrolyte membrane is a method, in which a solution where a solute is dissolved in a solvent is formed into a predetermined shape and is prepared into a film shape while evaporating the solvent with heat. This casting drying process takes a certain amount of time, and it is highly likely that it would be difficult to prepare uniform shapes of various shapes because the dry state of each portion due to heat varies in forming the concavo-convex portions.

According to the present disclosure, protrusions may be made on the surface of a roll press and the polymer electrolyte membrane having no protrusions is allowed to pass between the upper and lower rolls, and thereby concavo-convex portions may be formed on one side or both sides of a polymer electrolyte membrane by compression of the protrusions. The number of concavo-convex portions of the polymer electrolyte membrane may vary depending on the type of roll press.

The thickness of the polymer electrolyte membrane before the concavo-convex portions are formed may be, for example, 5 µm to 20 µm. However, the thickness of the polymer electrolyte membrane may be variously changed depending on the purpose.

The polymer electrolyte membrane 10 may include an ion conductor. The ion conductor may correspond to one selected from the group consisting of fluorine-based ionomers, hydrocarbon-based ionomers, and mixtures thereof. Detailed description will be described later because it overlaps with the first ionomer and the second ionomer to be described later.

The catalyst layer 20 according to the present disclosure may be disposed on the polymer electrolyte membrane 10. Specifically, the catalyst layer 20 may include a first catalyst layer 20a filling the inside of the concavo-convex portions 15 and a second catalyst layer 20b disposed on the polymer electrolyte membrane 10. The first catalyst layer 20a may be interposed between the polymer electrolyte membrane 10 and the second catalyst layer 20b.

The first catalyst layer 20a may include a first ionomer serving as a binder, and the second catalyst layer 20b may include a second ionomer serving as a binder.

Specifically, the first ionomer may be the same as or different from the second ionomer. For example, the weight of the first ionomer relative to the total weight of the first catalyst layer may be the same as or different from the weight of the second ionomer relative to the total weight of the second catalyst layer.

Preferably, the weight of the first ionomer relative to the total weight of the first catalyst layer may be greater than the weight of the second ionomer relative to the total weight of the second catalyst layer. For example, the weight of the first ionomer relative to the total weight of the first catalyst layer may exceed 35 wt%, whereas the weight of the second ionomer relative to the total weight of the second catalyst layer may be less than 35 wt%.

Conventionally, when a catalyst layer is formed by coating one type of catalyst slurry on both sides of a polymer electrolyte membrane provided with concavo-convex portions followed by drying the same, there was a problem in that chemical and mechanical durability are not improved as a whole because the bonding at the interface between the polymer electrolyte membrane and the catalyst layer is lowered due to the bonding between flat surfaces. According to the present disclosure, chemical and mechanical durability of the interface can be improved by forming the second catalyst layer after forming the concavo-convex portions and forming the first catalyst layer having a high ionomer content on the concavo-convex portions. By increasing the weight of the first ionomer to that of the second ionomer, the interfacial bonding between the polymer electrolyte membrane and the catalyst layer may be increased, and simultaneously durability between the catalyst layers may be improved as a whole. Additionally, by lowering the ionomer content of the second catalyst layer, it is possible to obtain the effect of improving performance through smooth mass transfer.

The first ionomer and the second ionomer may each independently be any one selected from the group consisting of hydrocarbon-based ionomers, fluorine-based ionomers, and mixtures thereof.

The fluorine-based ionomer may correspond to a fluorine-containing polymer containing fluorine in a main chain having a cation exchange group or anion exchange group; or a partially fluorinated polymer such as a polystyrene-graft-ethylenetetrafluoroethylene copolymer and a polystyrene-graft-polytetrafluoroethylene copolymer. The fluorine-based ionomer may correspond to a fluorine-based polymer, for example, including poly(perfluorosulfonic acid), poly(perfluorocarboxylic acid), a copolymer of tetrafluoroethylene containing a sulfonic acid group and fluorovinyl ether, defluorinated sulfurized polyether ketone, and a mixture thereof.

The cation exchange group is a functional group capable of transferring cations (*e.g.,* hydrogen ions) and may be, for example, an acidic group (*e.g.,* a sulfonic acid group, a carboxyl group, a boronic acid group, a phosphoric acid group, an imide group, a sulfonimide group, a sulfonamide group, *etc*.), and may generally be a sulfonic acid group or carboxyl group.

The anion exchange group is a polymer capable of transporting anions (*e.g.,* hydroxy ions, carbonate, or bicarbonate), and the anion exchange group is commercially available in the form of a hydroxide or halide (usually chloride), and the anion exchange group may be used in industrial water purification, metal separation, catalytic processes, *etc.*

As the polymer containing the anion exchange group, a polymer doped with a metal hydroxide may generally be used, and specifically, poly(ethersulfone), polystyrene, vinyl-based polymer, poly(vinyl chloride), poly(vinylidene fluoride), poly(tetrafluoroethylene), poly(benzimidazole), poly(ethylene glycol), *etc.* doped with a metal hydroxide may be used.

The hydrocarbon-based ionomer may correspond to a hydrocarbon-based polymer having a cation exchange group or anion exchange group. For example, the hydrocarbon-based polymer may correspond to a hydrocarbon-based polymer which includes, in the main chain, at least one selected from the group consisting of imidazole, benzimidazole, polyamide, polyamideimide, polyimide, polyacetal, polyethylene, polypropylene, acrylic resin, polyester, polysulfone, polyether, polyetherimide, polyester, polyethersulfone, polyetherimide, polycarbonate, polystyrene, polyphenylenesulfide, polyetheretherketone, polyetherketone, polyarylethersulfone, polyphosphazene, and polyphenylquinoxaline.

The hydrocarbon-based ionomer may include sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof, but the technical idea of the present disclosure is not limited thereto.

As the catalyst layer 20 according to the present disclosure, any catalyst that can be used as a catalyst for an oxidation reaction of hydrogen gas and/or a reduction reaction of oxygen gas may be used, and preferably, a platinum-based metal or non-platinum-based metal may be used.

As the platinum-based metal, platinum (Pt) and/or a Pt-M alloy may be used. M may be any one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture of two or more thereof may be used.

As the non-platinum metal, one selected from the group consisting of palladium (Pd), ruthenium (Ru), iridium (Ir), osmium (Os), and a non-platinum alloy may be used. As the non-platinum alloy, Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, Fe-N, Fe-P, Co-N, or a mixture of two or more of thereof may be used.

The catalyst layer 20 according to still another embodiment of the present disclosure may include a catalyst in which metal nanoparticles fill the top of the surface of a carrier or internal pores.

The carrier may be, for example, a carbon-based carrier, a porous inorganic oxide (*e.g.,* zirconia, alumina, titania, silica, ceria, *etc*.), or zeolite.

The carbon-based carrier may be selected from graphite, Super P, carbon fiber, carbon sheet, carbon black, Ketjen black, Denka black, acetylene black, carbon nanotube (CNT), carbon sphere, carbon ribbon, fullerene, activated carbon, carbon nano fiber, carbon nanowire, carbon nanoball, carbon nanohorn, carbon nanocage, carbon nanoring, ordered nano-/mesoporous carbon, carbon aerogel, mesoporous carbon, graphene, stabilized carbon, activated carbon, and combinations of one or more these, but is not limited thereto, and carriers that can be used in the art may be used without limitation.

The carrier preferably has a surface area of 50 m²/g or more, and an average particle diameter of 10 nm to 300 nm. When the surface area of the carrier is less than the above numerical range, uniform distribution of metal particles cannot be obtained.

FIG. 2 is an enlarged cross-sectional view of the concave-convex portions of FIG. 1.

Referring to FIG. 2, the first catalyst layer 20a according to the present disclosure may completely fill the entire volume of the first concave portion.

The first catalyst layer 20a may include a first central portion cp and side wall portions swp. The side wall portions swp may refer to members on both sides of the first central portion cp. Specifically, the sidewall portions swp may be provided with a first sidewall portion swp1 and a second sidewall portion swp2 disposed opposite to each other with the first central portion cp interposed therebetween.

The first sidewall portion swp1 may include a first side surface ss1 and a first curved surface cs 1 extending from the first side surface ss 1 to an upper surface cpu of the first central portion cp. In the process of forming the first catalyst layer, since the catalyst layer disposed on the polymer electrolyte membrane exhibits a concave shape as a whole due to the influence of surface tension, *etc.,* the first curved surface cs1 may essentially be formed. An upper surface cpu of the first central portion cp may be, for example, a flat surface.

The second side wall portion swp2 may include a second side surface ss2 and a second curved surface cs2 extending from the second side surface ss2 to an upper surface cpu of the first central portion cp. In the process of forming the first catalyst layer, since the catalyst layer disposed on the polymer electrolyte membrane exhibits a concave shape as a whole due to the influence of surface tension, *etc.,* the second curved surface cs2 may essentially be formed.

The first central portion cp and the side wall portions swp may contact the polymer electrolyte membrane 10. Specifically, the first central portion cp and the side wall portions swp may be disposed directly on the polymer electrolyte membrane 10.

The thickness H of the first central portion cp may be greater than 0 µm and less than 1 µm, preferably 0.1 µm to 0.9 µm. When the thickness H of the first central portion cp exceeds the above numerical range, there may be a problem in that interfacial durability and interfacial bonding strength performance may deteriorate.

The minimum value I of the thickness of the first sidewall portion swp 1 may be greater than 0 and less than 0.8 times the thickness H of the first central portion, and preferably greater than 0 and less than 0.5 times the thickness H of the first central portion. When the minimum value I of the thickness of the first sidewall portion swp1 is less than the above numerical range, there may be a problem in that the concave/convex curvature is weak and thus the interfacial bonding strength is decreased, thereby resulting in a decrease in durability, whereas when it exceeds the above numerical range, there may be a problem in that the thickness H may exceed 1 µm, resulting in a decrease in interface durability and interfacial bonding strength.

The maximum value B of the width of the first side wall portion swp 1 may be less than 0.2 times the width A between the first side surface ss1 and the second side surface ss2, and may preferably be 0.02 to 0.18 times. When the maximum value B of the width of the first sidewall portion swp1 exceeds the above numerical range, there may be a problem in that the concave/convex curvature is weak, and thus the interfacial bonding strength is decreased, thereby resulting in a decrease in durability.

The curvature R of the first curved surface cs1 may be equal to or less than the difference H-I between the thickness H of the first central portion and the minimum value I of the thickness of the first sidewall portion. When the curvature of the first curved surface cs1 exceeds the difference H-I between the thickness H of the first central portion and the minimum thickness I of the first sidewall portion, there may be a problem in that the maximum value B of the width of the first sidewall portion swp1 increases, the concave/convex curvature is weak, and the interfacial bonding strength is decreased, thereby resulting in a decrease of durability. The curvature of the first curved surface cs1 may be measured, for example, by a method of comparing a circle whose radius is the maximum value B of the width of the first sidewall portion swp1 with a circle whose radius is the difference H-I between the thickness H of the first central portion cp and the minimum value I of the thickness of the side wall portion swp1. That is, the curvature may be calculated by calculating the reverse of the radii of curvature defined by the two circles.

For example, the above-described thickness H of the first central portion cp, the minimum value I of the thickness of the first sidewall portion swp1, and the maximum value B of the width of the first sidewall portion swp1, and the curvature R of the first curved surface cs1 may all be measured or calculated through cross-sectional analysis using a scanning electron microscope (SEM).

Unlike what is shown in FIG. 1, according to another embodiment of the present disclosure, the first catalyst layer 20a may fill the entire volume of the first concave portion, and furthermore, may be extended to a part of the upper surface of the first convex portion disposed on one side surface of the first concave portion. Therefore, the width A between the first side surface ss1 and the second side surface ss2 may be 90% to 110%, and preferably 95 to 105% based on the electrode active area of the individual concave-convex portion. When the width A between the first side surface ss1 and the second side surface ss2 is outside the above numerical range, the first catalyst layer may not be able to fill 80% or more of the concavo-convex or fill greater than 120% of the concavo-convex, thus not being able to improve interfacial durability and the specific gravity of the second catalyst layer may be lowered, thereby resulting in deterioration of performance. For example, the width A between the first side surface ss1 and the second side surface ss2 may be measured through cross-sectional analysis using a scanning electron microscope (SEM).

The first catalyst layer 20a according to still another embodiment of the present disclosure may further include a functional additive.

The functional additive may include any one selected from the group consisting of a radical scavenger, a heat dissipation material, a chelating agent, a hygroscopic material, and combinations thereof, and preferably, it is desirable to include all of these.

The content of the functional additive is preferably 5 wt% to 67 wt% based on the total solid content of the first catalyst layer. When the content of the functional additive is less than the above numerical range, the heat dissipation effect and the oxygen radical trapping effect may not be sufficiently improved, whereas when the content of the functional additive exceeds the above numerical range, it may not be easy to coat the catalyst slurry.

The radical scavenger may be, for example, any one selected from a transition metal, ions of a transition metal, an oxide of a transition metal, a complex of a transition metal, a precious metal, ions of a precious metal, an oxide of a precious metal, a complex of a precious metal, and combinations thereof. However, the technical spirit of the present disclosure is not limited thereto, and any particle form capable of capturing oxygen radicals may be applied.

The transition metal may be any one selected from the group consisting of cerium (Ce), manganese (Mn), tungsten (W), cobalt (Co), vanadium (V), nickel (Ni), chromium (Cr), zirconium (Zr), yttrium (Y), iridium (Ir), iron (Fe), titanium (Ti), molybdenum (Mo), lanthanum (La), and neodymium (Nd).

The precious metal may be any one selected from the group consisting of silver (Ag), platinum (Pt), ruthenium (Ru), palladium (Pd), and rhodium (Rh).

Since the first catalyst layer according to the present disclosure includes a radical scavenger, oxygen radicals generated during the operation of a fuel cell can be effectively trapped. Accordingly, it is possible to effectively prevent oxygen radicals from changing the structure of the ion conductor compound corresponding to the hydrogen ion channel.

The heat dissipation material may be, for example, hexagonal-boron nitride (h-BN), AlN, Al₂O₃, TiO₂, ZnO, ZrO, SiO₂, *etc.* The heat dissipation material may improve performance of a fuel cell by dissipating heat generated during the operation of a fuel cell to the outside.

The chelating agent may be, for example, citric acid. The chelating agent has the purpose of holding dissolved metal ions and may have an effect of improving durability.

The hygroscopic material may be, for example, an acrylic resin containing acrylic acid as a monomer or a silicate-based compound. The first catalyst layer according to the present disclosure may have an effect of improving low-humidity performance by including the hygroscopic material.

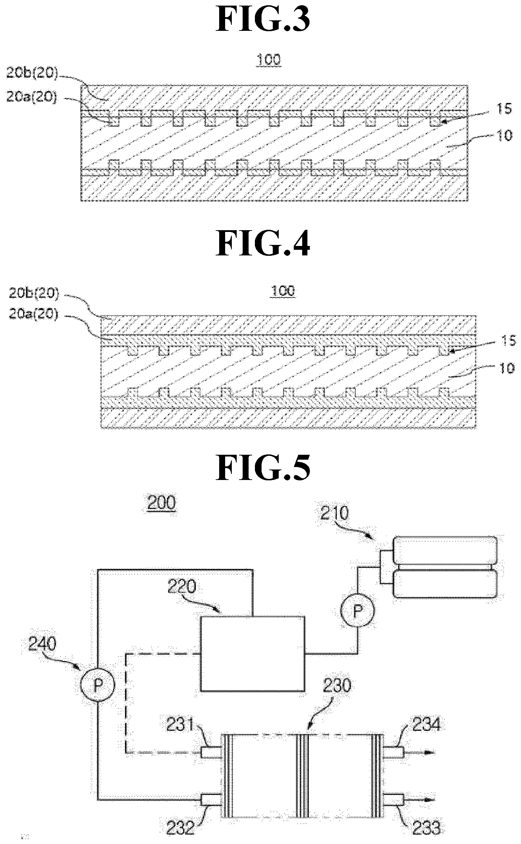

FIG. 3 is a cross-sectional view showing a membrane-electrode assembly according to another embodiment of the present disclosure. The parts described above and repeated descriptions are briefly described or omitted.

Referring to FIG. 3, the first catalyst layer 20a according to the present disclosure may be disposed on the surface of the first convex portion while filling the inside of the concavo-convex portions 15. Preferably, the thickness of the first catalyst layer disposed on the surface of the first convex portion is within 1 µm.

The second catalyst layer 20b may be interposed between a part of the first catalyst layer 20a disposed on the surface of the first convex portion and another part thereof. In other words, the second catalyst layer 20b may be inserted between the accommodation spaces defined by the first catalyst layer. The accommodating space is defined as a space between a part of the first catalyst layer 20a disposed on the surface of the first convex portion and another part thereof.

In the membrane-electrode assembly according to the present disclosure, since the first catalyst layer 20a is disposed on the surface of the first convex portion, the interfacial bonding between the polymer electrolyte membrane and the catalyst layer can be further improved. Accordingly, durability of the membrane-electrode assembly can be improved.

FIG. 4 is a cross-sectional view showing a membrane-electrode assembly according to still another embodiment of the present disclosure. The parts described above and repeated descriptions are briefly described or omitted.

Referring to FIG. 4, the first catalyst layer 20a according to the present disclosure may be disposed directly on the polymer electrolyte membrane 10, and specifically, may be disposed on both the surface of the first concave portion and the first convex portion.

Preferably, the maximum thickness of the first catalyst layer 20a is within 2 µm. In this specification, the "maximum thickness of the first catalyst layer 20a" is defined as the height from the surface where the first catalyst layer 20a and the polymer electrolyte membrane 10 come into contact to the surface where the first catalyst layer 20a and the second catalyst layer 20b come into contact.

### 2. Fuel cell

Still another embodiment of the present disclosure provides a fuel cell including the membrane-electrode assembly.

FIG. 5 is a schematic diagram for describing a fuel cell according to still another embodiment of the present disclosure.

Referring to FIG. 5, the fuel cell 200 according to the present disclosure may include a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which supplies the oxidizing agent to the reforming unit 220 and the stack 230.

The stack 230 may be provided with a plurality of unit cells which generate electrical energy by inducing an oxidation/reduction reaction between a reformed gas including hydrogen gas supplied from the reforming unit 220 and the oxidizing agent supplied from the oxidizing agent supplying unit 240.

Each unit cell, which refers to a unit cell that generates electricity, may include the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate may be provided with a pipe-shaped first supply pipe 231 for injecting the reformed gas including hydrogen gas supplied from the reforming unit 220; and a pipe-shaped second supply pipe 232 for injecting oxygen gas; and the other end plate may be provided with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

In the fuel cell, since the separator, the fuel supply unit, and the oxidizing agent supply unit constituting the electricity generation unit are used in a conventional fuel cell, a detailed description thereof will be omitted herein.

Hereinafter, embodiments of the present disclosure will be described in detail so that those skilled in the art can easily practice the same, but these are merely exemplary embodiments, and the scope of rights of the present disclosure is not limited thereto.

### [Preparatory Preparation Example 1: Preparation of polymer electrolyte membrane]

### <Comparative Preparation Example 1: Preparation of polymer electrolyte membrane not containing concavo-convex portions>

A polymer electrolyte membrane was prepared through the step of applying, to a glass substrate, a polymer solution in which a solvent, in which water and isopropanol are mixed in a 1:1 weight ratio, and perfluorosulfonic acid are mixed using a doctor blade, and the step of gradually raising the temperature of the applied solution to 80°C followed by drying for 4 hours.

### <Preparatory Example 1: Preparation of polymer electrolyte membrane containing concave-convex portions>

A polymer electrolyte membrane was prepared through the step of applying, to a glass substrate, a polymer solution in which a solvent, in which water and isopropanol are mixed in a 1:1 weight ratio, and perfluorosulfonic acid are mixed using a doctor blade, and the step of gradually raising the temperature of the applied solution to 80°C followed by drying for 4 hours. Thereafter, after removing the glass substrate, the polymer electrolyte membrane having a first concave portion having a depth of 2 µm was prepared by pressing both sides of the polymer electrolyte membrane using a roll press (roll temperature: 120°C to 160°C) including concavo-convex portions.

### [Preparation Example 1: Preparation of membrane-electrode assembly]

When preparing the membrane-electrode assembly according to an embodiment, the content of the catalyst slurry was adjusted by calculating in advance the volume of the first concave portions formed in the polymer electrolyte membrane according to Preparation Example 1.

### <Comparative Example 1-1: Membrane-electrode assembly prepared using a polymer electrolyte membrane without concavo-convex portions>

A catalyst slurry (3.5 mL), in which a commercial Pt/C catalyst from Tanaka and a binder (Nafion D-521) were mixed in a 1:0.48 weight ratio, was directly coated on both surfaces of the polymer electrolyte membrane according to Comparative Preparation Example 1. Then, the membrane was dried at 80°C for 5 minutes to prepare a membrane-electrode assembly.

### <Comparative Example 1-2: A membrane-electrode assembly prepared using a polymer electrolyte membrane having concavo-convex portions, in which a catalyst layer is formed using only one type of catalyst slurry>

A first catalyst slurry (3.5 mL), in which a commercially available Pt/C catalyst from Tanaka and a first ionomer (Nafion D-521) were mixed in a 1:0.48 weight ratio, was coated on both surfaces of the polymer electrolyte membrane according to Preparatory Example 1 to form a first catalyst layer.

### <Example 1-1: Membrane-electrode assembly in which 80% or more of the first catalyst layer is filled based on the total volume of the first concave portions>

A first catalyst slurry (0.7mL), in which a commercially available Pt/C catalyst from Tanaka and a first ionomer (Nafion D-521) were mixed in a 1:0.56 weight ratio was coated on both surfaces of the polymer electrolyte membrane according to Preparation Example 1 and dried at 80°C for 2 minutes to adjust such that 90% (v/v) of the first catalyst layer was filled based on the total volume of the first concave portions. Thereafter, a second catalyst slurry (3.0 mL), in which a commercial Pt/C catalyst and a second ionomer (Nafion D-521) were mixed in a 1:0.48 weight ratio, was directly coated by a slot-die method on the remaining 10% (v/v) volume of the first concave portions and on the surfaces of the first convex portions alternately disposed with the first concave portions. Thereafter, the coated second catalyst slurry was dried at 80°C for 4 minutes to form a second catalyst layer.

### <Example 1-2: When the binder content is unlike Example 1-1>

A membrane-electrode assembly was prepared in the same method as in Example 1-1, except that the first catalyst slurry and a second catalyst slurry, in which a commercial Pt/C catalyst and an ionomer (Nafion D-521) were mixed in a 1:3 weight ratio, were used.

### <Example 1-3: When the type of binder is a hydrocarbon-based ionomer unlike Example 1-1>

A membrane-electrode assembly was prepared in the same method as in Example 1-1, except that the first catalyst slurry and a second catalyst slurry, in which sulfonated poly(arylene ether sulfone)(sPAES; sulfonation degree 17%) was used instead of the fluorine-based ionomer (Nafion D-521), were used.

### <Example 1-4: When functional additives are included in the first catalyst slurry>

A membrane-electrode assembly was prepared in the same method as in Example 1-1, except that a mixed catalyst slurry was prepared in which 100 parts by weight of the first catalyst slurry, in which a commercial Pt/C catalyst and the first ionomer (Nafion D-521) were mixed in a 1:3 weight ratio based on the total weight of the first catalyst slurry, 7 parts by weight of radical scavenger particles (CeO₂) were mixed.

### <Example 2-1: Membrane-electrode assembly in which less than 80% of the first catalyst layer is filled based on the total volume of the first concave portions>

A membrane-electrode assembly was prepared in the same method as in Example 1-1, except that the first catalyst layer was adjusted to be filled 75% (v/v) based on the total volume of the first concave portions using the first catalyst slurry (0.59 mL) and the second catalyst slurry (3.11 mL).

### <Example 3-1: When the first catalyst layer is completely filled based on the total volume of the first concave portions>

A membrane-electrode assembly was prepared in the same method as in Example 1-1, except that the first catalyst layer was adjusted such that the total volume of the first concave portions was filled using the first catalyst slurry (0.85 mL). Specifically, the first catalyst layer was adjusted such that the thickness H of the first central portion constituting the first catalyst layer was 0.8 µm, the width A between the first and second side surfaces was 3 µm, the minimum thickness I of the first side wall portion was 0.3 µm, the maximum value B of the width of the first sidewall portion was 0.5 µm, and the curvature of the first curved surface was 0.4 µm⁻¹.

Thereafter, the second catalyst slurry (2.85 mL) according to Example 1-1 was coated on the first convex portions and the surface of the first catalyst layer to form a second catalyst layer having a thickness of 9 µm.

### <Example 4-1: When parameters are not satisfied unlike Example 3-1>

A membrane-electrode assembly was prepared in the same method as in Example 3-1, except that adjustments were made using the first catalyst slurry (1.0 mL) and the second catalyst slurry (2.7 mL) such that the thickness H of the first central portions constituting the first catalyst layer was 1.2 µm, the width A between the first and second side surfaces was 3 µm, the minimum value I of the thickness of the first side wall was 1.0 µm, and the maximum value B of the width of the first side wall is 0.8 µm, and the curvature of the first curved surface was 0.3 µm⁻¹.

### [Experimental Example 1: Mechanical durability evaluation of membrane-electrode assembly]

The chemical durability of the membrane-electrode assembly according to Preparation Example 1 was evaluated based on the durability evaluation protocol of the U.S. Department of Energy (DOE). Specifically, for the evaluation of chemical durability of the membrane-electrode assembly under repeated cycle conditions of a cycle of being wet for 2 minutes-being dry for 2 minutes and under 80°C and air/air conditions, the wet-dry cycling was performed 20,000 cycles, and then, then hydrogen gas crossover was each measured and the measured values are shown in Table 1 below.

**[Table 1]**

| Membrane-Electrode Assembly | Hydrogen Gas Crossover (ppm) |
|---|---|
| Comparative Example 1-1 | 10.8 |
| Comparative Example 1-2 | 6.5 |
| Example 1-1 | 3.7 |
| Example 1-2 | 6.5 |
| Example 1-3 | 5.1 |
| Example 1-4 | 3.6 |
| Example 2-1 | 6.0 |
| Example 3-1 | 3.7 |
| Example 4-1 | 3.9 |

Referring to Table 1, when the amount of hydrogen gas is measured at the cathode electrode, it can be confirmed that the amount of hydrogen gas permeating the polymer electrolyte membrane measured in Examples is significantly less compared to those measured in Comparative Examples. According to an embodiment of the present disclosure, it can be inferred that the performance and lifetime of the fuel cell can be extended by remarkably improving the chemical durability of the membrane-electrode assembly.

Comparing Examples 1-1 and 1-2 from the aspect of the content of the ionomer serving as a binder, when the ionomer content in the first catalyst slurry is greater than the ionomer content in the second catalyst slurry, it can be seen that the amount of hydrogen gas is significantly reduced.

Comparing Examples 1-1 and 2-1 from the aspect of the amount that the first catalyst layer being filled based on the total volume of the first concave portions, it can be inferred that when 80% (v/v) or more of the first catalyst layer is filled based on the total volume of the first concave portions, the amount of hydrogen gas permeating the polymer electrolyte membrane is significantly lowered, and thus the chemical durability is remarkably improved.

### [Experimental Example 2: Images of membrane-electrode assembly according to Example 1-1]

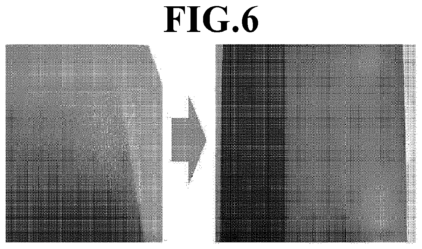

FIG. 6 shows images of the membrane-electrode assembly according to Example 1-1.

Referring to FIG. 6, it can be inferred that the membrane-electrode assembly according to Example 1-1 is realized.

Although the preferred embodiments of the present disclosure have been described in detail above, the scope of the present disclosure is not limited thereto, and various modifications and improvements of those skilled in the art using the basic concept of the present disclosure defined in the following claims also fall within the scope of rights of the invention.

## Claims

1. A membrane-electrode assembly comprising:
a polymer electrolyte membrane having concavo-convex portions on at least one surface; and
a catalyst layer disposed on the polymer electrolyte membrane,
wherein the catalyst layer comprises a first catalyst layer filling the inside of the concavo-convex portions and a second catalyst layer disposed on the polymer electrolyte membrane; and
wherein the first catalyst layer is interposed between the polymer electrolyte membrane and the second catalyst layer.

2. The membrane-electrode assembly of claim 1,
wherein the first catalyst layer comprises a first ionomer and the second catalyst layer comprises a second ionomer; and
wherein the weight of the first ionomer relative to the total weight of the first catalyst layer is the same as or different from the weight of the second ionomer relative to the total weight of the second catalyst layer.

3. The membrane-electrode assembly of claim 2,
wherein the weight of the first ionomer relative to the total weight of the first catalyst layer is greater than the weight of the second ionomer relative to the total weight of the second catalyst layer.

4. The membrane-electrode assembly of claim 3,
wherein the weight of the first ionomer relative to the total weight of the first catalyst layer exceeds 35 wt% and the weight of the second ionomer relative to the total weight of the second catalyst layer is less than 35 wt%.

5. The membrane-electrode assembly of claim 2,
wherein the first ionomer and the second ionomer are each independently any one selected from the group consisting of hydrocarbon-based ionomers, fluorine-based ionomers, and mixtures thereof.

6. The membrane-electrode assembly of claim 1,
wherein the concavo-convex portions comprise first concave portions, and first convex portions arranged alternately with the first concave portions; and
wherein the first catalyst layer is filled with 80% (v/v) or more based on the total volume of the concave portions.

7. The membrane-electrode assembly of claim 6,
wherein the first catalyst layer completely fills the entire volume of the first concave portions, and the first catalyst layer comprises a first central portion and a side wall portion provided with a first side wall portion and a second side wall portion disposed opposite to each other with the first central portion interposed therebetween; and
wherein the first side wall portion comprises a first side surface and a first curved surface extending from the first side surface to an upper surface of the first central portion, and the second side wall portion comprises a second side surface and a second curved surface extending from the second side surface to an upper surface of the first central portion.

8. The membrane-electrode assembly of claim 7,
wherein the thickness H of the first central portion is greater than 0 µm and less than 1 µm.

9. The membrane-electrode assembly of claim 7,
wherein the minimum value I of the thickness of the first side wall portion is greater than 0 and less than 0.8 times the thickness H of the first central portion.

10. The membrane-electrode assembly of claim 9,
wherein the minimum value I of the thickness of the first side wall portion is greater than 0 and less than 0.5 times the thickness H of the first central portion.

11. The membrane-electrode assembly of claim 7,
wherein the maximum value B of the width of the first side wall portion is less than 0.2 times the width A between the first side surface and the second side surface.

12. The membrane-electrode assembly of claim 7,
wherein the curvature R of the first curved surface is less than the difference H-I between the thickness H of the first central portion and the minimum value I of the thickness of the first side wall portion.

13. The membrane-electrode assembly of claim 2,
wherein the first catalyst layer further comprises a functional additive.

14. A fuel cell comprising the membrane-electrode assembly according to claim 1.
